# EUROPÄISCHE PATENTSCHRIFT

(11) **EP 3 643 631 B1**
(45) Veröffentlichungstag und Bekanntmachung des Hinweises auf die Patenterteilung: **12.05.2021**
(21) Anmeldenummer: 19190327.7
(22) Anmeldetag: 06.08.2019
(51) Int. Cl.: B65B 59/04, B29C 31/00

(54) **VERFAHREN UND WERKZEUGWAGEN ZUM TRANSFERIEREN EINER WERKZEUGKOMPONENTE**
METHOD AND TOOL CART FOR TRANSFERRING A TOOL COMPONENT
PROCÉDÉ ET VÉHICULE-OUTIL PERMETTANT DE TRANSFÉRER UN COMPOSANT D'OUTIL

(30) Priorität: 26.10.2018 DE 102018218410
(43) Veröffentlichungstag der Anmeldung: 29.04.2020
(73) Patentinhaber: MULTIVAC Sepp Haggenmüller SE & Co. KG, 87787 Wolfertschwenden (DE)
(72) Erfinder: HUBER, Michael, 87764 Maria Steinbach (DE); HÖPNER, Bernd, 87437 Kempten (DE); FACKLER, Sebastian, 87724 Ottobeuren (DE); NEGELE, Wolfgang, 87724 Ottobeuren (DE)
(74) Vertreter: Grünecker Patent- und Rechtsanwälte PartG mbB

(56) Entgegenhaltungen:
- EP-A1- 1 598 275
- EP-A2- 1 878 633
- DE-A1- 3 801 032
- DE-A1- 10 209 000

## Beschreibung

Die Erfindung bezieht sich auf ein Verfahren zum Transferieren einer Werkzeugkomponente zwischen einer Arbeitsstation einer Verpackungsmaschine und einem zum Aufnehmen der Werkzeugkomponente konfigurierten Werkzeugwagen sowie auf einen Werkzeugwagen zum Aufnehmen einer Werkzeugkomponente einer Arbeitsstation einer Verpackungsmaschine.

Verpackungsmaschinen werden, insbesondere, wenn sie zum Verarbeiten von Lebensmitteln genutzt werden, häufig auf Aufstellflächen aufgestellt, die ein Gefälle aufweisen, um zu vermeiden, dass sich Flüssigkeitsansammlungen bilden, sowie um zu gewährleisten, dass zum Beispiel Reinigungsflüssigkeiten geordnet abfließen. Durch geeignete Vorrichtungen am Gestell der Verpackungsmaschinen werden deren Förderlinien waagerecht ausgerichtet. Dementsprechend müssen auch Werkzeugwagen zum Aufnehmen von Werkzeugkomponenten aus Arbeitsstationen von solchen Verpackungsmaschinen entsprechend auf die jeweilige Arbeitsstation ausgerichtet werden, um die Werkzeugkomponente sicher aufnehmen zu können.

Um einen sicheren Transfer der Werkzeugkomponente zwischen dem Werkzeugwagen und der Arbeitsstation zu gewährleisten, muss die Position des Werkzeugwagens relativ zur Arbeitsstation während des Transfers durch geeignete Vorrichtungen festgelegt werden. Aus der EP 1 598 275 A1 ist ein Werkzeugwagen bekannt, der beim vertikalen Ausrichten, d.h. beim vertikalen Anheben des Wagens, auch in horizontaler Richtung arretiert wird, indem Positionierungselemente an dem Wagen in korrespondierende Positionierungselemente an der Verpackungsmaschine eingesetzt werden. Da die endgültige Positionierung während des Einführens der Positionierungselemente ineinander erfolgt, ist der dort offenbarte Werkzeugwagen auch während des Anhebens noch verrückbar, was unter Aspekten der Arbeitssicherheit nachteilig sein kann.

Aus der EP 1 878 633 A2 ist ein Werkzeugwagen bekannt, der zum Einhängen an der entsprechenden Verpackungsmaschine eingerichtet ist. Dazu werden zunächst Rollen eines Fahrwerks ausgefahren, sodass ein Gestell des Wagens angehoben wird. Das Gestell wird dann beim Herunterlassen derart gekippt, dass es sich an der Verpackungsmaschine einhängt, sodass beim weiteren Einfahren des Fahrgestells die Rollen den Kontakt mit der Aufstellfläche verlieren. Auch hier erfolgt die horizontale Festlegung also während des vertikalen Verfahrens des Werkzeugwagens, was zum Beispiel bei dem Verkippen nachteilig für die Arbeitssicherheit werden kann, da ein Umkippen des Wagens wahrscheinlicher wird.

Eine Aufgabe der Erfindung ist es demnach, ein Verfahren zum Transferieren einer Werkzeugkomponente zwischen einer Arbeitsstation einer Verpackungsmaschine und einem zum Aufnehmen der Werkzeugkomponente konfigurierten Werkzeugwagen sowie einen Werkzeugwagen zum Aufnehmen einer Werkzeugkomponente einer Arbeitsstation einer Verpackungsmaschine anzugeben, mit dem eine erhöhte Arbeitssicherheit gewährleistet ist.

Diese Aufgabe wird erfindungsgemäß gelöst durch ein Verfahren mit den Merkmalen gemäß dem Anspruch 1 sowie durch einen Werkzeugwagen mit den Merkmalen des Anspruchs 5.

Das erfindungsgemäße Verfahren zum Transferieren einer Werkzeugkomponente zwischen einer Arbeitsstation einer Verpackungsmaschine und einem zum Aufnehmen der Werkzeugkomponente konfigurierten Werkzeugwagen umfasst die folgenden Schritte: horizontales Ausrichten des Werkzeugwagens relativ zu der Arbeitsstation und/oder der Verpackungsmaschine, horizontales Arretieren des Werkzeugwagens relativ zu der Arbeitsstation und/oder der Verpackungsmaschine, vertikales Anheben eines Gestells des Werkzeugwagens durch eine Hubvorrichtung, bis ein Anschlagelement des Werkzeugwagens an einer Unterseite der Arbeitsstation und/oder der Verpackungsmaschine anliegt, wobei durch das Anlegen des Anschlagelements an der Unterseite der Arbeitsstation und/oder der Verpackungsmaschine der Werkzeugwagen vertikal relativ zu der Arbeitsstation und/oder der Verpackungsmaschine ausgerichtet wird, wobei das horizontale Arretieren unabhängig von dem vertikalen Anheben erfolgt, sowie Transferieren der Werkzeugkomponente zwischen dem Werkzeugwagen und der Arbeitsstation.

Bei der Verpackungsmaschine kann es sich zum Beispiel um eine Tiefziehverpackungsmaschine, eine Schalenverschließmaschine oder generell um eine lebensmittelverarbeitende Verpackungsmaschine handeln. Als eine Arbeitsstation einer solchen Verpackungsmaschine kann zum Beispiel eine Siegelstation verstanden werden, die zum Versiegeln von Verpackungen konfiguriert ist. Als Arbeitsstation kann außerdem eine Formstation, die zum Formen von Verpackungsbestandteilen konfiguriert ist, oder auch eine Schneidstation, die zum Vereinzeln von fertigen Verpackungen konfiguriert ist, verstanden werden.

Als horizontal kann im Sinne der vorliegenden Offenbarung eine Ebene angesehen werden, die parallel zur Waagerechten verläuft. Ebenso ist als horizontal im Sinne der vorliegenden Offenbarung auch eine Ebene anzusehen, die parallel zu einer Aufstellfläche einer Verpackungsmaschine bzw. einer Arbeitsstation verläuft. Horizontales Ausrichten ist im Sinne der vorliegenden Offenbarung also derart zu verstehen, dass der Werkzeugwagen relativ zu der Arbeitsstation und/oder der Verpackungsmaschine parallel zu den vorgenannten Ebenen positioniert wird. Als horizontales Arretieren kann im Sinne der vorliegenden Offenbarung verstanden werden, dass durch das Arretieren Bewegungen in diesen Ebenen verhindert werden.

Als Anschlagelement können eine oder mehrere Strukturen des Werkzeugwagens angesehen werden, die beim vertikalen Anheben des Gestells in Eingriff mit Strukturen, beispielsweise einer Unterseite der Arbeitsstation und/oder der Verpackungsmaschine, gebracht werden und dadurch beispielsweise gewährleisten, dass der Werkzeugwagen derart relativ zu Arbeitsstation und/oder der Verpackungsmaschine ausgerichtet ist, dass ein sicheres Transferieren der Werkzeugkomponente möglich ist.

Dadurch, dass das horizontale Arretieren unabhängig von dem vertikalen Anheben erfolgt, kann die Arbeitssicherheit erhöht werden, da zum Beispiel während des Anhebens horizontale Bewegungen verhindert werden können. Dies ist von Bedeutung, da das vertikale Anheben in der Regel durch Maschinenelemente, wie zum Beispiel Pneumatikzylinder oder sonstige Antriebe, das horizontale Bewegen jedoch häufig durch menschliche Bediener erfolgt, die den z. B. auf Rollen gelagerten Werkzeugwagen manuell verschieben. Dadurch, dass die manuellen und die maschinell angetriebenen Bewegungen voneinander getrennt werden, kann die Arbeitssicherheit erhöht werden, weil beispielsweise während des angetriebenen vertikalen Anhebens kein manuelles, horizontales Verschieben mehr möglich ist, das zum Beispiel ein Umkippen des Wagens verursachen könnte. Dies wäre insbesondere bei einem mit Werkzeugkomponenten beladenen Werkzeugwagen gefährlich.

Dementsprechend ist es vorteilhaft, wenn das vertikale Anheben ausgeführt wird, nachdem das horizontale Arretieren ausgeführt wurde. Dies ermöglicht einen besonders sicheren Ablauf des Verfahrens.

Besonders günstig ist es, wenn durch das Anheben des Gestells an dem Gestell angeordnete Rollelemente von einer Aufstellfläche der Verpackungsmaschine abgehoben werden. Auf diese Weise kann im angehobenen Zustand die Gefahr eines Wegrollens weiter verringert werden.

Es ist denkbar, dass der Betrieb der Hubvorrichtung derart gesteuert oder geregelt wird, dass das Gestell während des Transferierens der Werkzeugkomponente nicht absinkt. Auf diese Art und Weise kann die Gefahr eines Kippens des Werkzeugwagens, die insbesondere beim Transferieren der Werkzeugkomponente durch die Verlagerung des Schwerpunktes besteht, verringert werden.

Die Erfindung bezieht sich auch auf einen Werkzeugwagen zum Aufnehmen einer Werkzeugkomponente einer Arbeitsstation einer Verpackungsmaschine, wobei der Werkzeugwagen ein Gestell, eine Hubvorrichtung zum Anheben des Gestells sowie eine Arretiervorrichtung aufweist, die dazu konfiguriert ist, den Werkzeugwagen horizontal relativ zu der Arbeitsstation und/oder der Verpackungsmaschine zu Arretieren, wobei die Hubvorrichtung und die Arretiervorrichtung unabhängig voneinander betreibbar sind, wobei der Werkzeugwagen des Weiteren ein Anschlagelement aufweist, das dazu konfiguriert ist, beim Anheben des Gestells mit einer Unterseite der Arbeitsstation und/oder der Verpackungsmaschine in Eingriff zu kommen.

Dadurch, dass die Hubvorrichtung unabhängig von der Arretiervorrichtung betreibbar ist, kann die Arbeitssicherheit erhöht werden, da zum Beispiel während des Anhebens horizontale Bewegungen verhindert werden können. Dies ist von Bedeutung, da das vertikale Anheben in der Regel durch Maschinenelemente, wie zum Beispiel Pneumatikzylinder oder sonstige Antriebe, das horizontale Bewegen jedoch häufig durch menschliche Bediener erfolgt, die den z. B. auf Rollen gelagerten Werkzeugwagen manuell verschieben. Dadurch, dass die manuellen und die maschinell angetriebenen Bewegungen voneinander getrennt werden, kann die Arbeitssicherheit erhöht werden, weil beispielsweise während des angetriebenen vertikalen Anhebens kein manuelles, horizontales Verschieben mehr möglich ist, das zum Beispiel ein Umkippen des Wagens verursachen könnte. Dies wäre insbesondere bei einem mit Werkzeugkomponenten beladenen Werkzeugwagen gefährlich.

In einer vorteilhaften Variante ist die Hubvorrichtung derart konfiguriert, dass beim Anheben des Gestells an dem Gestell angeordnete Rollelemente von einer Aufstellfläche der Verpackungsmaschine abgehoben werden. Auf diese Weise kann im angehobenen Zustand die Gefahr eines Wegrollens weiter verringert werden.

Es ist denkbar, dass der Werkzeugwagen an eine Energieversorgung der Arbeitsstation und/oder der Verpackungsmaschine anschließbar ist. Auf diese Art und Weise muss in bzw. an dem Werkzeugwagen weder ein eigener Energiespeicher noch eine lange Leitung zur nächsten Energiequelle vorgesehen sein. Insbesondere kann der Werkzeugwagen einen Pneumatikanschluss aufweisen, der an eine Druckluftversorgung der Arbeitsstation und/oder der Verpackungsmaschine anschließbar ist. Mithilfe von Pneumatik betriebene Antriebselemente sind insbesondere im lebensmittelverarbeitenden Bereich vorteilhaft, da Hygieneauflagen dadurch einfacher einzuhalten sind als beispielsweise mit Hydraulikvorrichtungen.

Es ist vorteilhaft, wenn die Hubvorrichtung einen Zylinder umfasst. Dies stellt eine besonders einfache Variante zum Anheben dar. Des Weiteren ist eine breite Vielfalt von Zylindervarianten am Markt verfügbar. Wie bereits erwähnt, ist es vorteilhaft, wenn der Zylinder ein pneumatischer Zylinder ist.

In einer weiteren vorteilhaften Variante kann der Werkzeugwagen eine Drehvorrichtung umfassen, die dazu konfiguriert ist, die durch den Werkzeugwagen aufgenommene Werkzeugkomponente um eine horizontale und/oder eine vertikale Achse zu drehen. Auf diese Art und Weise können beispielsweise Wartungs- oder Reparaturarbeiten direkt im Werkzeugwagen ausgeführt werden. Die Werkzeugkomponente müsste also nicht erst noch beispielsweise in eine Werkstatt transportiert werden.

Es ist des Weiteren denkbar, dass der Werkzeugwagen und/oder die Drehstation zur Anpassung an unterschiedliche Typen von Werkzeugkomponenten oder Arbeitsstationen vorzugsweise werkzeuglos verstellbar ist. Auf diese Art und Weise kann ein und derselbe Werkzeugwagen bei verschiedenen Maschinentypen oder verschiedenen Arbeitsstation derselben Verpackungsmaschine eingesetzt werden.

In einer weiteren Variante kann der Werkzeugwagen eine Bedienvorrichtung aufweisen, die zum Betätigen der Hubvorrichtung konfiguriert ist und die durch einen Bediener nur beidhändig bedienbar ist. Dies kann der weiteren Verbesserung der Arbeitssicherheit dienen, da so die Gefahr verringert wird, dass Gliedmaßen des Bedieners während des angetriebenen Anhebens des Werkzeugwagens eingeklemmt werden.

Es ist vorstellbar, dass die Arretiervorrichtung zum Eingreifen mit der Arbeitsstation und/oder der Verpackungsmaschine unterhalb der Unterseite der Arbeitsstation und/oder der Verpackungsmaschine konfiguriert ist, beispielsweise mit Stützen, die zum Tragen der Arbeitsstation und/oder Verpackungsmaschine zwischen dieser und der Aufstellfläche vorgesehen sind.

Des Weiteren ist denkbar, dass der Werkzeugwagen derart konfiguriert ist, dass das Gestell im horizontal arretierten Zustand des Werkzeugwagens anhebbar ist. Dies kann ebenfalls die Arbeitssicherheit erhöhen, da eine horizontale Sicherung während des vertikalen Anhebens gewährleistet ist.

Die Erfindung bezieht sich auf ein Verfahren und einen Werkzeugwagen der vorstehend beschriebenen Art. Im Folgenden wird eine vorteilhafte Ausführung anhand von Zeichnungen näher erläutert.
- Fig. 1A-1E: zeigen schematische Ansichten einer Verpackungsmaschine und eines Werkzeugwagens gemäß einem Ausführungsbeispiel während verschiedener Phasen eines beispielhaften erfindungsgemäßen Verfahrens.
- Fig. 2: zeigt eine schematische Draufsicht auf ein Anschlagelement und eine Arretiervorrichtung des Werkzeugwagens aus Figur 1.
- Fig. 3: zeigt eine schematische Ansicht einer Bedienvorrichtung des Werkzeugwagens aus Figur 1.

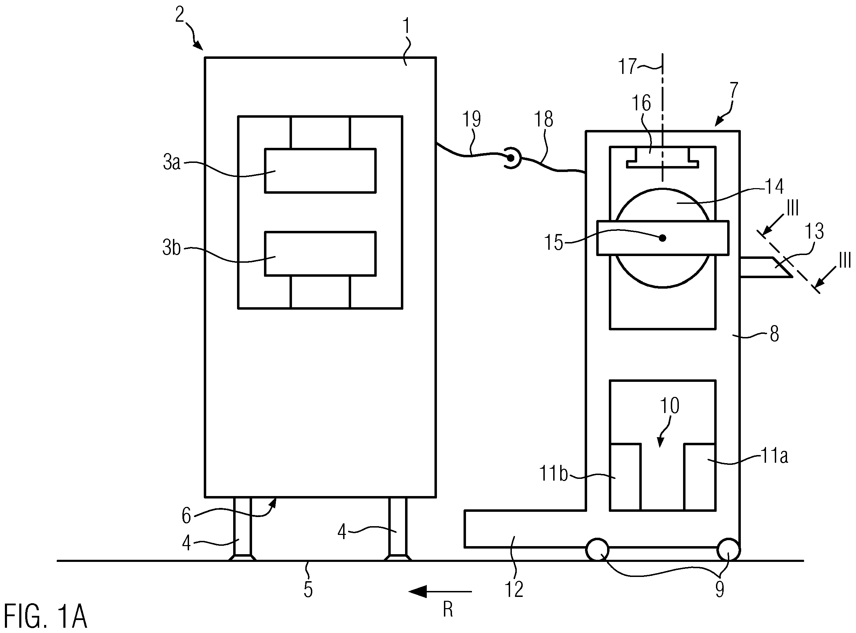

In Figur 1A ist eine Arbeitsstation 1 einer Verpackungsmaschine 2 schematisch dargestellt. Wie im vorliegenden Ausführungsbeispiel, kann es sich dabei um eine Siegelstation handeln. Die Arbeitsstation 1 kann eine erste Werkzeugkomponente 3a und eine zweite Werkzeugkomponente 3b umfassen. Bei der ersten Werkzeugkomponente 3a kann es sich zum Beispiel um ein oberes Siegelwerkzeug handeln. Bei der zweiten Werkzeugkomponente 3b kann es sich zum Beispiel um ein unteres Siegelwerkzeug handeln. Die Verpackungsmaschine 2 und/oder die Arbeitsstation 1 können von Stützen 4 auf einer Aufstellfläche 5 getragen werden. Die Stützen 4 können einzeln höhenverstellbar sein, um die Verpackungsmaschine 2 und/oder die Arbeitsstation 1 waagerecht auszurichten. Durch die Stützen 4 kann des Weiteren ein Abstand zwischen der Aufstellfläche 5 und einer Unterseite 6 der Arbeitsstation 1 und/oder der Verpackungsmaschine 2 vorgesehen sein.

Figur 1A zeigt des Weiteren eine schematische Ansicht eines Werkzeugwagens 7 gemäß einem Ausführungsbeispiel der Erfindung. Der Werkzeugwagen 7 kann ein Gestell 8 umfassen. Das Gestell 8 kann rollbar auf Rollelementen 9 gelagert sein. Dadurch kann der Werkzeugwagen 7 auf der Aufstellfläche 5 rollbar sein. Der Werkzeugwagen 7 kann des Weiteren eine Hubvorrichtung 10 aufweisen. Diese kann zum Anheben des Gestells 8 gegenüber der Aufstellfläche 5 konfiguriert sein. Zu diesem Zweck kann die Hubvorrichtung 10 einen Zylinder 11a aufweisen. Wie im vorliegenden Ausführungsbeispiel, können jedoch auch mehrere Zylinder 11 vorgesehen sein. In Figur 1A ist beispielsweise ein zweiter Zylinder 11b zu erkennen. Besonders bevorzugt sind vier Zylinder 11. Bei jedem der Zylinder 11 kann es sich um einen Pneumatikzylinder handeln.

Wie in Figur 1A zu erkennen, kann der Werkzeugwagen 7 des Weiteren ein Anschlagelement 12 aufweisen. Wie im vorliegenden Ausführungsbeispiel, kann das Anschlagelement 12 in der Nähe der Aufstellfläche 5 vorgesehen sein. Es kann darüber hinaus derart dimensioniert sein, dass es in den Zwischenraum zwischen der Unterseite 6 der Arbeitsstation 1 und/oder der Verpackungsmaschine 2 und der Aufstellfläche 5 einführbar ist.

Zum Betätigen der Hubvorrichtung 10 kann an dem Werkzeugwagen 7 eine Bedienvorrichtung 13 vorgesehen sein. Der Werkzeugwagen 7 kann außerdem eine erste Drehvorrichtung 14 aufweisen, die dazu konfiguriert ist, eine durch den Werkzeugwagen 7 aufgenommene Werkzeugkomponente 3a, 3b um eine horizontale Achse 15 zu schwenken. Des Weiteren kann der Werkzeugwagen 7 eine zweite Drehvorrichtung 16 aufweisen. Diese kann dazu eingerichtet sein, eine durch den Werkzeugwagen 7 aufgenommene Werkzeugkomponente 3a, 3b um eine vertikale Achse 17 zu schwenken. Die erste und die zweite Drehvorrichtung 14, 16 können auch in einer Drehvorrichtung zusammengefasst werden.

Da der Werkzeugwagen 7 verschiedene Vorrichtungen aufweisen kann, die nicht ausschließlich manuell betrieben werden können, sondern eine weitere Energieversorgung erfordern, kann der Werkzeugwagen 7 an eine Energieversorgung (nicht dargestellt) der Verpackungsmaschine 2 und/oder der Arbeitsstation 1 anschließbar sein. Der Werkzeugwagen 7 kann hierzu eine Kupplungsvorrichtung 18 aufweisen. Diese kann an einen Anschluss 19, der an der Arbeitsstation 1 und/oder der Verpackungsmaschine 2 vorgesehen sein kann, anschließbar sein. Dabei kann es sich, wie im vorliegenden Ausführungsbeispiel, insbesondere um einen Druckluftanschluss handeln, der mit einer Pneumatikkupplung verwendbar sein kann.

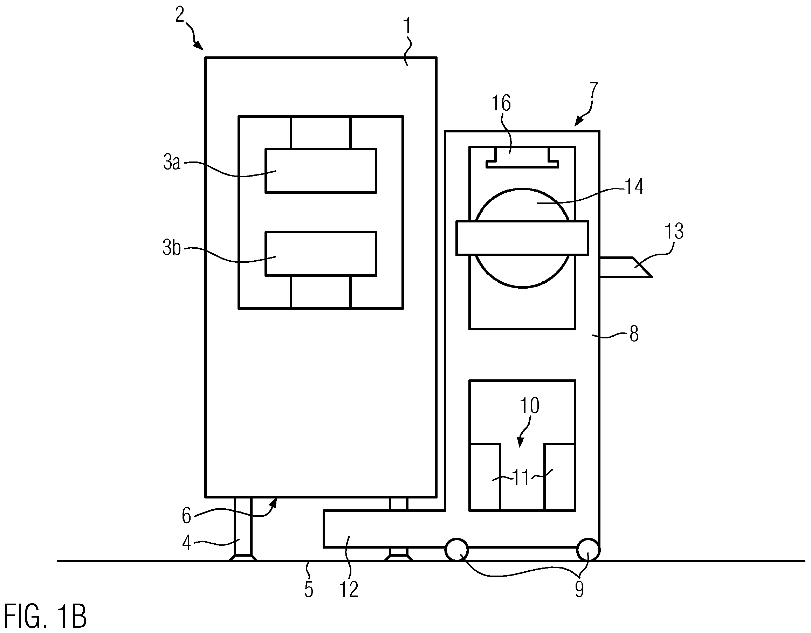

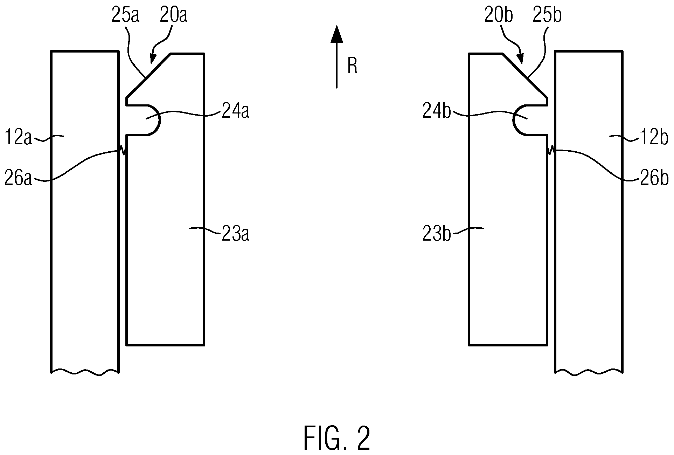

Im Folgenden soll nun ein Ausführungsbeispiel des erfindungsgemäßen Verfahrens anhand der Figuren 1A bis 1E beschrieben werden. Aus einer in Figur 1A beispielhaft dargestellten Ausgangsposition kann der Werkzeugwagen 7, beispielsweise durch einen Bediener, relativ zu der Arbeitsstation und/oder der Verpackungsmaschine horizontal ausgerichtet werden. In der in Figur 1B beispielhaft dargestellten, korrekt ausgerichteten Position kann der Werkzeugwagen 7 relativ zu der Arbeitsstation 1 und/oder der Verpackungsmaschine 2 horizontal arretiert werden. Dazu kann eine Arretiervorrichtung 20 (siehe Figur 2) vorgesehen sein.

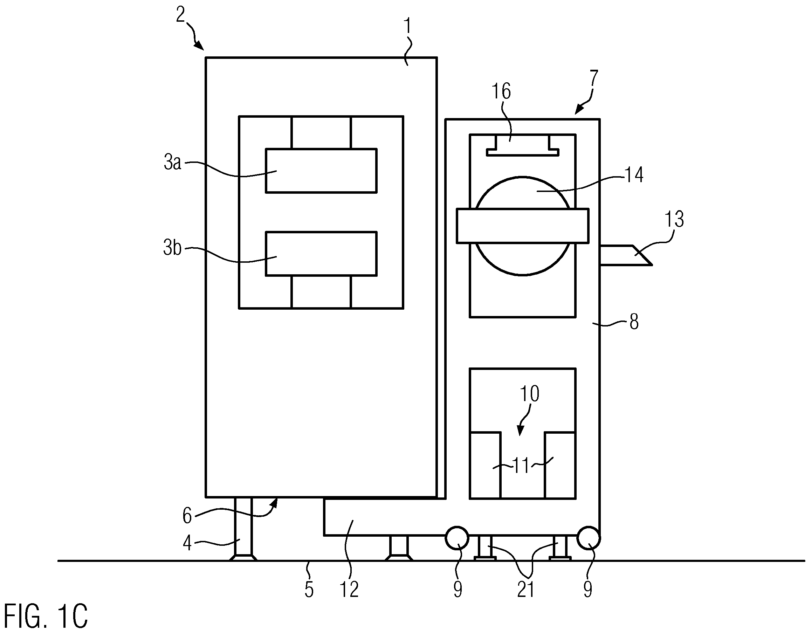

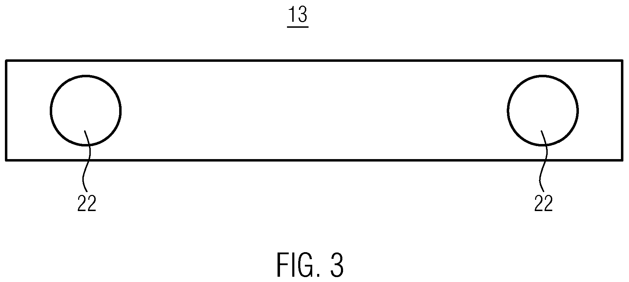

Durch Betätigen der Hubvorrichtung 10 kann das Gestell 8 des Werkzeugwagens 7 relativ zu der Aufstellfläche 5 angehoben werden. Eine beispielhafte angehobene Position ist in Figur 1C dargestellt. Das Anheben kann durch Ausfahren von Kolbenstangen 21 der Zylinder 11 erfolgen. Wie in Figur 1C zu sehen, können die Rollelemente 9 beim Anheben des Gestells 8 von der Aufstellfläche 5 abgehoben werden. Der Werkzeugwagen 7 kann angehoben werden, bis das Anschlagelement 12 mit der Unterseite 6 der Arbeitsstation 1 und/oder der Verpackungsmaschine 2 in Eingriff kommt. Durch den Eingriff zwischen dem Anschlagelement 12 und der Unterseite 6 kann der Werkzeugwagen 7 relativ zu der Arbeitsstation 1 und/oder der Verpackungsstation 2 ausgerichtet werden. Die Betätigung der Hubvorrichtung 10 kann durch an der Bedienvorrichtung 13 vorgesehene Bedienelemente 22 (siehe Figur 3) ausgelöst werden.

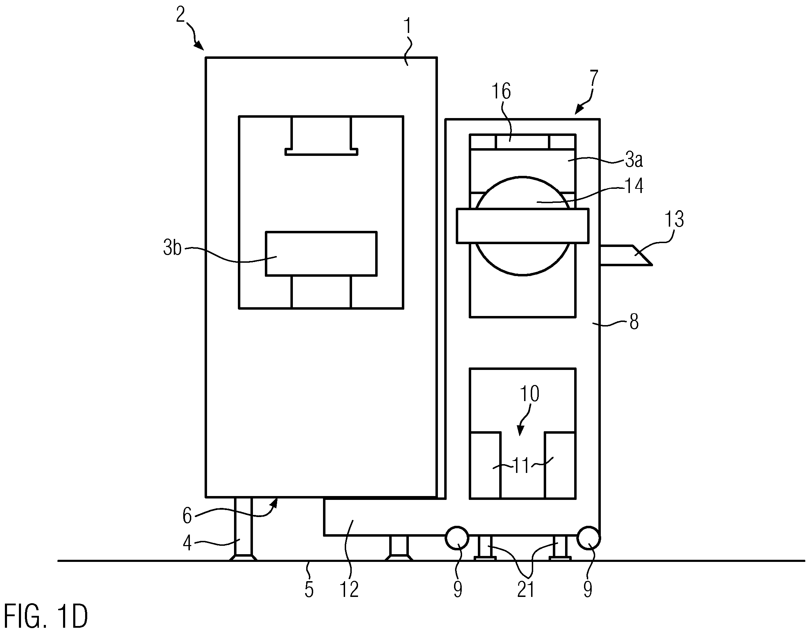

Wenn der Werkzeugwagen 7 sowohl horizontal als auch vertikal relativ zu der Arbeitsstation 1 und/oder der Verpackungsmaschine 2 ausgerichtet ist, kann die erste Werkzeugkomponente 3a und/oder die zweite Werkzeugkomponente 3b zwischen dem Werkzeugwagen 7 und der Arbeitsstation 1 transferiert werden. Als Transferieren zwischen diesen beiden Vorrichtungen kann dabei sowohl das Herausnehmen aus der Arbeitsstation 1 und Aufnehmen in dem Werkzeugwagen 7 verstanden werden als auch das Herausnehmen aus dem Werkzeugwagen 7 und das Aufnehmen in der Arbeitsstation 1. Figur 1D zeigt eine Darstellung, in der die erste Werkzeugkomponente 3a in dem Werkzeugwagen 7 aufgenommen ist. Die erste Werkzeugkompetente 3a kann nun durch Herablassen des Gestells 8 des Werkzeugwagens 7 und verschieben auf den Rollelementen 9 in ein Lager verbracht, zu einer anderen Arbeitsstation und/oder Verpackungsmaschine transportiert werden.

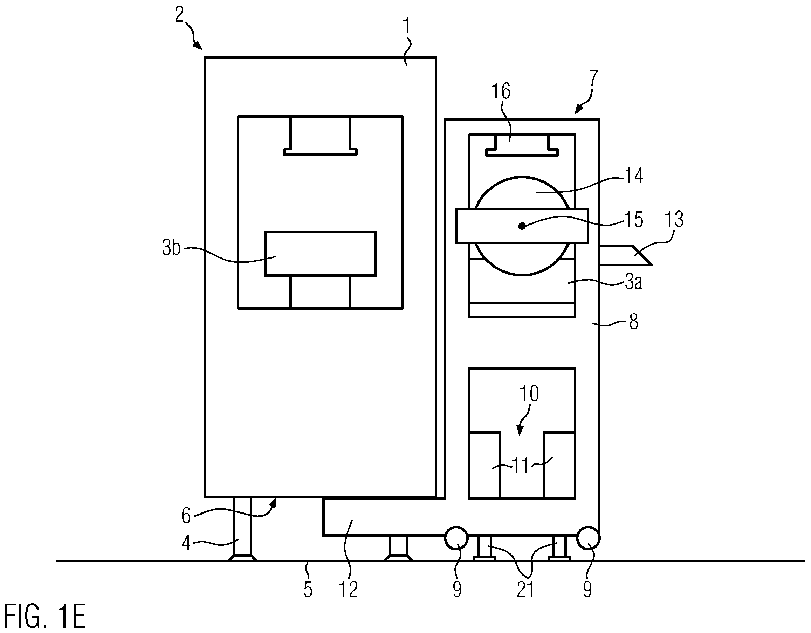

Außerdem ist es denkbar, dass noch in dem im Werkzeugwagen 7 aufgenommen Zustand Wartungsarbeiten an der ersten Werkzeugkomponente 3a vorgenommen werden. Um diese Wartungsarbeiten zu erleichtern, kann die erste Werkzeugkomponente 3a durch die erste Drehvorrichtung 14 um eine horizontale Achse 15 geschwenkt werden. In Figur 1E ist die erste Werkzeugkomponente 3a in einem um 180° um die horizontale Achse 15 geschwenkten Zustand dargestellt. Andere geeignete Schwenkwinkel, wie z. B. 45° oder 90°, können weitere Vorteile aufweisen. Auch ein Schwenken um eine vertikale Achse, zum Beispiel der vertikalen Achse 17, durch die zweite Drehvorrichtung 16 kann der Vereinfachung von Wartungsarbeiten dienen.

In Figur 2 ist eine schematische Darstellung einer beispielhaften Arretiervorrichtung 20 dargestellt. Die Zeichnungsebene der Figur 2 verläuft dabei parallel zu der Unterseite 6 mit Blickrichtung nach unten in Richtung der Aufstellfläche 5. Aus dieser Perspektive ist zu erkennen, dass zwei Anschlagelemente 12a, 12b vorgesehen sein können. Es ist des Weiteren denkbar, dass zwei Arretiervorrichtungen 20a, 20b vorgesehen sind. Wie in dem dargestellten Ausführungsbeispiel kann die Arretiervorrichtung 20a mit dem Anschlagelement 12a zusammenwirken. Gleiches kann für die Arretiervorrichtung 20b und das Anschlagelement 12b gelten. Um Wiederholungen zu vermeiden, bezieht sich die folgende Erläuterung der Funktion lediglich auf die Arretiervorrichtung 20a, ist jedoch analog auch auf die Arretiervorrichtung 20b anwendbar.

Die Arretiervorrichtung 20a kann ein Klinkenelement 23a umfassen. Das Klinkenelement 23a kann relativ zu dem Anschlagelement 12a bewegbar sein. Insbesondere ist ein Schwenken denkbar. Aber auch eine lineare Bewegung ist vorstellbar. Das Klemmelement 23a kann eine Öffnung 24a aufweisen. Die Öffnung 24a kann dazu eingerichtet sein, eine der Stützen 4 aufzunehmen. Dabei besteht die Möglichkeit, alternativ das Klemmelement 23a oder allgemein die Arretiervorrichtung 20a an einem anderen Gegenstand als der Maschinenstütze 4 zu arretieren.

Des Weiteren kann das Klinkenelement 23a eine Führungsfläche 25a aufweisen. Die Führungsfläche 25a kann dazu eingerichtet sein, beim Schieben des Werkzeugwagens 7 in einer Einschubrichtung R mit einer der Stützen 4 einzugreifen, sodass das Klinkenelement 23a bewegt wird, bis zwischen dem Anschlagelement 12a und dem Klinkenelement 23a ein Zwischenraum vorhanden ist, der es der Stütze 4 ermöglicht in die Öffnung 24a zu gleiten. Eine Bewegung des Klinkenelements 23a kann dabei beispielsweise durch ein Federelement 26a (nicht dargestellt) in Richtung des Anschlagelements 12a vorgespannt sein. Sobald durch diese Vorspannung das Klinkenelement 23a wieder in die in Figur 2 dargestellte Ausgangsposition zurückgeschnappt ist, ist der Werkzeugwagen 7 relativ zu der Arbeitsstation 1 und/oder der Verpackungsmaschine 2 horizontal arretiert.

Figur 3 zeigt eine schematische Darstellung der Bedienvorrichtung 13 aus der in Figur 1A durch die Pfeile III-III angedeuteten Perspektive. Dort ist zu erkennen, dass die Bedienelemente 22 in Abschnitten vorgesehen sein können, die gegenüberliegenden Enden der Bedienvorrichtung 13 zugeordnet sind. Die Bedienelemente 22 sollten dabei so weit wie möglich entfernt voneinander liegen, sodass sie durch einen Bediener gleichzeitig nur beidhändig zu betätigen sind.

## Patentansprüche

1. Verfahren zum Transferieren einer Werkzeugkomponente (3a, 3b) zwischen einer Arbeitsstation (1) einer Verpackungsmaschine (2) und einem zum Aufnehmen der Werkzeugkomponente (3a, 3b) konfigurierten Werkzeugwagen (7), umfassend folgende Schritte:
Horizontales Ausrichten des Werkzeugwagens (7) relativ zu der Arbeitsstation (1) und/oder der Verpackungsmaschine (2),
Horizontales Arretieren des Werkzeugwagens (7) relativ zu der Arbeitsstation (1) und/oder der Verpackungsmaschine (2),
Vertikales Anheben eines Gestells (8) des Werkzeugwagens (7) durch eine Hubvorrichtung (10), bis ein Anschlagelement (12) des Werkzeugwagens (7) an einer Unterseite (6) der Arbeitsstation (1) und/oder der Verpackungsmaschine (2) anliegt, wobei durch das Anlegen des Anschlagelements (12) an der Unterseite (6) der Arbeitsstation (1) und/oder der Verpackungsmaschine (2) der Werkzeugwagen (7) vertikal relativ zu der Arbeitsstation (1) und/oder der Verpackungsmaschine (2) ausgerichtet wird,
wobei das horizontale Arretieren unabhängig von dem vertikalen Anheben erfolgt,
Transferieren der Werkzeugkomponente (3a, 3b) zwischen dem Werkzeugwagen (7) und der Arbeitsstation (1).

2. Verfahren nach Anspruch 1, wobei das vertikale Anheben ausgeführt wird, nachdem das horizontale Arretieren ausgeführt wurde.

3. Verfahren nach Anspruch 1 oder 2, wobei durch das Anheben des Gestells (8) an dem Gestell (8) angeordnete Rollelemente (9) von einer Aufstellfläche (5) der Verpackungsmaschine (2) abgehoben werden.

4. Verfahren nach einem der vorangehenden Ansprüche, wobei der Betrieb der Hubvorrichtung (10) derart gesteuert oder geregelt wird, dass das Gestell (8) während des Transferierens der Werkzeugkomponente (3a, 3b) nicht absinkt.

5. Werkzeugwagen (7) zum Aufnehmen einer Werkzeugkomponente (3a, 3b) einer Arbeitsstation (1) einer Verpackungsmaschine (2), wobei der Werkzeugwagen (7) ein Gestell (8), eine Hubvorrichtung (10) zum Anheben des Gestells (8) sowie eine Arretiervorrichtung (20) aufweist, die dazu konfiguriert ist, den Werkzeugwagen (7) horizontal relativ zu der Arbeitsstation (1) und/oder der Verpackungsmaschine (2) zu arretieren, wobei der Werkzeugwagen (7) des Weiteren ein Anschlagelement (12) aufweist, das dazu konfiguriert ist, beim Anheben des Gestells (8) mit einer Unterseite (6) der Arbeitsstation (1) und/oder der Verpackungsmaschine (2) in Eingriff zu kommen, **dadurch gekennzeichnet, dass** die Hubvorrichtung (10) und die Arretiervorrichtung (20) unabhängig voneinander betreibbar sind.

6. Werkzeugwagen nach Anspruch 5, wobei die Hubvorrichtung (10) derart konfiguriert ist, dass beim Anheben des Gestells (8) an dem Gestell (8) angeordnete Rollelemente (9) von einer Aufstellfläche (5) der Verpackungsmaschine (2) abgehoben werden.

7. Werkzeugwagen nach Anspruch 5 oder 6, wobei der Werkzeugwagen (7) eine Kupplungsvorrichtung (18) aufweist, die an einen Anschluss (19), vorzugsweise einen Druckluftanschluss, der Arbeitsstation (1) und/oder der Verpackungsmaschine (2) anschließbar ist.

8. Werkzeugwagen nach einem der Ansprüche 5 bis 7, wobei die Hubvorrichtung (10) einen Zylinder (11) umfasst.

9. Werkzeugwagen nach Anspruch 8, wobei der Zylinder (11) ein pneumatischer Zylinder ist.

10. Werkzeugwagen nach einem der Ansprüche 5 bis 9, wobei der Werkzeugwagen (7) eine Drehvorrichtung (14, 16) umfasst, die dazu konfiguriert ist, die durch den Werkzeugwagen (7) aufgenommene Werkzeugkomponente (3a, 3b) um eine horizontale Achse (15) oder eine vertikale Achse (17) zu drehen.

11. Werkzeugwagen nach einem der Ansprüche 5 bis 10, wobei der Werkzeugwagen (7) und/oder die Drehvorrichtung (14, 16) zur Anpassung an unterschiedliche Arbeitsstationen (1) und/oder Verpackungsmaschinen (2) und/oder Werkzeugkomponenten (3a, 3b), vorzugsweise werkzeuglos, verstellbar ist.

12. Werkzeugwagen nach einem der Ansprüche 5 bis 11, wobei der Werkzeugwagen (7) eine Bedienvorrichtung (13) aufweist, die zum Betätigen der Hubvorrichtung (10) konfiguriert ist und die durch einen Bediener nur beidhändig bedienbar ist.

13. Werkzeugwagen nach einem der Ansprüche 5 bis 12, wobei die Arretiervorrichtung (20) zum Eingreifen mit der Arbeitsstation (1) und/oder der Verpackungsmaschine (2) unter halb der Unterseite (6) der Arbeitsstation (1) und/oder der Verpackungsmaschine (2) konfiguriert ist.

14. Werkzeugwagen nach einem der Ansprüche 5 bis 13, wobei der Werkzeugwagen (7) derart konfiguriert ist, dass das Gestell (8) im horizontal arretierten Zustand des Werkzeugwagens (7) anhebbar ist.

## Claims

1. Method for transferring a tool component (3a, 3b) between a work station (1) of a packaging machine (2) and a tool cart (7) that is configured to receive said tool component (3a, 3b), comprising the following steps:
horizontally aligning said tool cart (7) relative to said work station (1) and/or said packaging machine (2),
horizontally locking said tool cart (7) relative to said work station (1) and/or said packaging machine (2),
vertically lifting a frame (8) of said tool cart (7) by way of a lifting device (10) until a stop element (12) of said tool cart (7) abuts against an underside (6) of said work station (1) and/or said packaging machine (2), wherein said stop element (12) abutting against said underside (6) of said work station (1) and/or said packaging machine (2) aligns said tool cart (7) vertically relative to said work station (1) and/or said packaging machine (2),
wherein the horizontal locking occurs independently of the vertical lifting,
transferring said tool component (3a, 3b) between said tool cart (7) and said work station (1).

2. Method according to claim 1, wherein the vertical lifting process is performed after the horizontal locking process has been executed.

3. Method according to claim 1 or 2, wherein lifting said frame (8) results in roller elements (9) arranged on said frame (8) being lifted off an installation surface (5) of said packaging machine (2).

4. Method according to one of the preceding claims, wherein the operation of said lifting device (10) is open-loop or closed-loop controlled such that said frame (8) does not lower during the transfer of said tool component (3a, 3b).

5. Tool cart (7) for receiving a tool component (3a, 3b) of a work station (1) of a packaging machine (2), wherein said tool cart (7) comprises a frame (8), a lifting device (10) for lifting said frame (8), as well as a locking device (20) which is configured to lock said tool cart (7) horizontally relative to said work station (1) and/or said packaging machine (2), wherein said tool cart (7) further comprises a stop element (12) which is configured to engage with an underside (6) of said work station (1) and/or said packaging machine (1) when said frame (8) is lifted, **characterized in that** said lifting device (10) and said locking device (20) are operable independently of each other.

6. Tool cart according to claim 5, wherein said lifting device (1) is configured such that roller elements (9) arranged on said frame (8) are lifted off an installation surface (5) of said packaging machine (2) while lifting said frame (8).

7. Tool cart according to claim 5 or 6, wherein said tool cart (7) comprises a coupling device (18) which is connectable to a port (19), preferably a compressed air port, of said work station (1) and/or said packaging machine (2).

8. Tool cart according to one of the claims 5 to 7, wherein said lifting device (10) comprises a cylinder (11).

9. Tool cart according to claim 8, wherein said cylinder (11) is a pneumatic cylinder.

10. Tool cart according to one of the claims 5 to 9, wherein said the tool cart (7) comprises a rotating device (14, 16) which is configured to rotate said tool component (3a, 3b) received by said tool cart (7) about a horizontal axis (15) or a vertical axis (17).

11. Tool cart according to one of the claims 5 to 10, wherein said tool cart (7) and/or said rotating device (14, 16) is adjustable for being adapted to different work stations (1) and/or packaging machines (2) and/or tool components (3a, 3b ), preferably without tools.

12. Tool cart according to one of the claims 5 to 11, wherein said tool cart (7) comprises an operating device (13) that is configured to operate said lifting device (10) and that can only be operated by an operator using both hands.

13. Tool cart according to one of the claims 5 to 12, wherein said locking device (20) is configured to engage with said work station (1) and/or said packaging machine (2) below said underside (6) of said work station (1) and/or said packaging machine (2).

14. Tool cart according to one of the claims 5 to 13, wherein said tool cart (7) is configured such that said frame (8) is liftable in the horizontally locked state of said tool cart (7).

## Revendications

1. Procédé de transfert d'un composant d'outil (3a, 3b) entre un poste de travail (1) d'une machine d'emballage (2) et un chariot à outil (7) configuré pour saisir le composant d'outil (3a, 3b), comprenant les étapes suivantes :
alignement horizontal du chariot à outil (7) par rapport au poste de travail (1) et/ou à la machine d'emballage (2),
arrêt horizontal du chariot à outil (7) par rapport au poste de travail (1) et/ou à la machine d'emballage (2),
levage vertical d'un châssis (8) du chariot à outil (7) par un dispositif de levage (10), jusqu'au contact d'un élément de butée (12) du chariot à outil (7) sur un côté inférieur (6) du poste de travail (1) et/ou de la machine d'emballage (2), dans lequel le chariot à outil (7) est aligné verticalement par rapport au poste de travail (1) et/ou à la machine d'emballage (2) par contact de l'élément de butée (12) sur le côté inférieur (6) du poste de travail (1) et/ou de la machine d'emballage (2), dans lequel l'arrêt horizontal se produit indépendamment du levage vertical,
transfert du composant d'outil (3a, 3b) entre le chariot à outil (7) et le poste de travail (1).

2. Procédé selon la revendication 1, dans lequel le levage vertical est réalisé après avoir effectué l'arrêt horizontal.

3. Procédé selon la revendication 1 ou 2, dans lequel des éléments de roulement (9) agencés sur le châssis (8) sont soulevés d'une surface de pose (5) de la machine d'emballage (2) par le levage du châssis (8).

4. Procédé selon l'une des revendications précédentes, dans lequel l'actionnement du dispositif de levage (10) est commandé ou réglé de telle sorte que le châssis (8) ne baisse pas pendant le transfert du composant d'outil (3a, 3b) .

5. Chariot à outil (7) pour saisir un composant d'outil (3a, 3b) d'un poste de travail (1) d'une machine d'emballage (2), dans lequel le chariot à outil (7) comporte un châssis (8), un dispositif de levage (10) pour lever le châssis (8), ainsi qu'un dispositif d'arrêt (20), configuré pour arrêter horizontalement le chariot à outil (7) par rapport au poste de travail (1) et/ou à la machine d'emballage (2), dans lequel le chariot à outil (7) comporte un autre élément de butée (12) configuré pour s'engager avec un côté inférieur (6) du poste de travail (1) et/ou de la machine d'emballage (2) lors d'un levage du châssis (8), **caractérisé en ce que** le dispositif de levage (10) et le dispositif d'arrêt (20) peuvent être commandés indépendamment.

6. Chariot à outil selon la revendication 5, dans lequel le dispositif de levage (10) est configuré de telle sorte que des éléments de roulement (9) agencés sur le châssis (8) sont soulevés d'une surface de pose (5) de la machine d'emballage (2) lors du levage du châssis (8).

7. Chariot à outil selon la revendication 5 ou 6, dans lequel le chariot à outil (7) comporte un dispositif de couplage (18) qui peut être connecté à une connexion (19), préférablement à une connexion d'air comprimé, du poste de travail (1) et/ou de la machine d'emballage (2).

8. Chariot à outil selon l'une des revendications 5 à 7, dans lequel le dispositif de levage (10) comporte un vérin (11) .

9. Chariot à outil selon la revendication 8, dans lequel le vérin (11) est un vérin pneumatique.

10. Chariot à outil selon l'une des revendications 5 à 9, dans lequel le chariot à outil (7) comporte un dispositif de rotation (14, 16) qui est configuré pour faire tourner le composant d'outil (3a, 3b) saisi par le chariot à outil (7) autour d'un axe horizontal (15) ou d'un axe vertical (17) .

11. Chariot à outil selon l'une des revendications 5 à 10, dans lequel le chariot à outil (7) et/ou le dispositif de rotation (14, 16) sont réglables, préférablement sans outil, pour l'adapter à différents postes de travail (1) et/ou machines d'emballage (2) et/ou composants d'outil (3a, 3b) .

12. Chariot à outil selon l'une des revendications 5 à 11, dans lequel le chariot à outil (7) comporte un dispositif de commande (13) configuré pour actionner le dispositif de levage (10) et qui peut être commandé par un utilisateur uniquement à deux mains.

13. Chariot à outil selon l'une des revendications 5 à 12, dans lequel le dispositif d'arrêt (20) est configuré pour s'engager avec le poste de travail (1) et/ou la machine d'emballage (2) sous le côté inférieur (6) du poste de travail (1) et/ou de la machine d'emballage (2).

14. Chariot à outil selon l'une des revendications 5 à 13, dans lequel le chariot à outil (7) est configuré de telle sorte que le châssis (8) peut être levé dans l'état horizontal arrêté du chariot à outil (7).
